# EUROPÄISCHE PATENTSCHRIFT

(11) **EP 3 755 526 B1**
(45) Veröffentlichungstag und Bekanntmachung des Hinweises auf die Patenterteilung: **15.03.2023**
(21) Anmeldenummer: 19715440.4
(22) Anmeldetag: 29.03.2019
(51) Int. Cl.: B29C 65/06, B29C 65/00

(54) **VORRICHTUNG ZUM SETZEN EINES SETZELEMENTS**
DEVICE FOR SETTING A SETTING ELEMENT
DISPOSITIF DE MISE EN PLACE D'UN ÉLÉMENT À METTRE EN PLACE

(30) Priorität: 23.04.2018 DE 102018109697
(43) Veröffentlichungstag der Anmeldung: 30.12.2020
(73) Patentinhaber: Weber Schraubautomaten GmbH, 82515 Wolfratshausen (DE)
(72) Erfinder: SCHÜRCH, Simon, 83674 Gaißach (DE); HARTMANN, Jochen, 83646 Bad Tölz (DE)
(74) Vertreter: Manitz Finsterwald Patent- und Rechtsanwaltspartnerschaft mbB
(86) Internationale Anmeldenummer: PCT/EP2019/058015
(87) Internationale Veröffentlichungsnummer: WO 2019/206560

(56) Entgegenhaltungen:
- WO-A1-2015/120900
- DE-A1-102015 110 081

## Beschreibung

Die Erfindung betrifft eine Vorrichtung zum Setzen eines Setzelements in einem Bauteil unter Erzeugung einer Reibschweißverbindung zwischen dem Setzelement und dem Bauteil.

Solche Vorrichtungen sind grundsätzlich bekannt und werden u.a. dazu verwendet, sogenannte Kunststoffdome in Sandwichstrukturen mit einem Waben- oder Schaumkern und Deckschichten aus faserverstärkten Kunststoffen einzubringen.

Zum Einbringen eines Setzelements, z.B. eines Kunststoffdoms, wird eine Antriebswelle, deren Stirnfläche mit einer Rückseite des Setzelements in Kontakt steht, von einer Rotationsvorschubeinheit in Rotation versetzt. Zusätzlich wird das sich drehende Setzelement von der Rotationsvorschubeinheit mit einer in Richtung der Drehachse wirkenden Axialkraft auf das Bauteil, z.B. auf die Deckschicht aus faserverstärktem Kunststoff, gedrückt, sodass sich das Setzelement und die Deckschicht durch Reibung erwärmen. Sobald die Deckschicht aufgeschmolzen ist, kann sich das Setzelement durch die Deckschicht hindurch in den Kern der Sandwichstruktur hineinbohren. Wenn die Deckschicht und der Kern wieder erkalten, entsteht eine Reibschweißverbindung zwischen dem Setzelement und dem Bauteil.

Solche Vorrichtungen können darüber hinaus dazu verwendet werden, metallische Setzelemente in Bauteile einer Vielzahl unterschiedlicher Materialien einzubringen.

DE 10 2015 110 081 A1 offenbart eine handgeführte Vorrichtung zu Setzen eines Setzelements. Die WO 2015/120900 A1 offenbart eine Vorrichtung zum Setzen eines Setzelements mit den Merkmalen des Oberbegriffs des Anspruchs 1.

Während des Setzprozesses verdrängt das Setzelement aufgeschmolzenes Material des Bauteils und des Setzelements. Das verdrängte Material bildet sogenannte Raupen an der Oberfläche des Bauteils, wodurch das Bauteil seine ursprüngliche Oberflächenform im Bereich der Raupen verliert. Dies ist insbesondere dann von Nachteil, wenn das Bauteil mit einem anderen Bauteil verbunden werden soll und die erstarrten Raupen eine flächige Anlage der beiden Bauteile verhindern.

Der Erfindung liegt die Aufgabe zugrunde, eine Vorrichtung der eingangs genannten Art bereitzustellen, mit der ein Setzelement in ein Bauteil eingebracht werden kann, so dass die dabei erzeugte Schmelze eine vorbestimmte Form auf der Oberfläche des Bauteils annimmt und zudem überschüssige Schmelze abgeleitet werden kann.

Die Aufgabe wird durch eine Vorrichtung mit den Merkmalen des Anspruchs 1 gelöst.

Der Erfindung liegt der Gedanke zu Grunde, die durch den Setzprozess aufgeschmolzene Schmelze in einem vordefinierten Raum zu halten, während die Schmelze wieder erstarrt. Hierdurch ist die Oberflächenform des Bauteils nach dem Setzen des Setzelements bekannt, was zu einer besseren Weiterverarbeitbarkeit des Bauteils führt. Speziell kann durch die Einstellmittel eine Höhe des Raumes eingestellt werden, wodurch definiert werden kann, wie dick die wiedererstarrte Schmelze auf dem ursprünglichen Bauteil auftragen soll. In anderen Worten kann durch die Vorrichtung ein gewünschter Abstand zwischen der Stirnfläche der Antriebswelle und der Anlagefläche des Niederhalters in einer Endposition eingestellt werden, um die Höhe der erstarrten Schmelze in einem Bereich des Setzelements zu bestimmen.

Vorteilhafte Ausbildungen der Erfindung sind den Unteransprüchen, der Beschreibung und der Zeichnung zu entnehmen.

Gemäß einer Ausführungsform erstreckt sich die Anlagefläche des Niederhalters ringförmig um die Antriebswelle herum. Die Anlagefläche ist somit drehsymmetrisch, sodass eine gleichmäßige Belastung des Bauteils entlang der Umfangsrichtung erfolgen kann.

Vorteilhafterweise ist die Antriebswelle mit einem Außengewinde versehen, welches in Eingriff mit einem Innengewinde eines als Einstellmutter ausgebildeten Einstellmittels steht. Bevorzugt ist durch ein Verdrehen der Einstellmutter relativ zu der Antriebswelle der minimale Abstand zwischen der Anlagefläche des Niederhalters und der Stirnfläche der Antriebswelle einstellbar. So kann stufenlos der Raum eingestellt werden, in den die beim Reibschweißen erzeugte Schmelze eintreten kann.

Die Einstellmittel können Fixiermittel umfassen, mittels derer die Einstellmittel fixiert werden können, sodass die Lage der Einstellmittel und somit der minimale Abstand zwischen der Anlagefläche des Niederhalters und der Stirnfläche der Antriebswelle fixiert ist. Die Fixiermittel können lösbar ausgestaltet sein, um eine Fixierung der Einstellmittel aufzulösen und so einen anderen minimalen Abstand zwischen der Anlagefläche des Niederhalters und der Stirnfläche der Antriebswelle einstellen zu können.

Die Fixiermittel können einen Feststellgewindestift bzw. eine Klemmschraube umfassen, mittels dessen bzw. der die Einstellmittel fixiert werden können. Falls die Einstellmittel eine Einstellmutter umfassen, können die Fixiermittel einen Feststellgewindestift bzw. eine Klemmschraube umfassen, welcher bzw. welche die Einstellmutter gegenüber der Antriebswelle fixiert, sodass sich die Einstellmutter nicht mehr relativ zur Antriebswelle verdrehen lässt.

Es ist zwischen einer Innenumfangsfläche des Niederhalters und einer Außenumfangsfläche der Antriebswelle ein Spalt zur Aufnahme beim Reibschweißen aufsteigender Schmelze vorgesehen. Der Spalt ist vorzugsweise mit dem Raum verbunden, dessen Höhe sich über die Einstellmittel einstellen lässt.

Der Spalt kann sich entlang des gesamten Umfangs zwischen der Innenumfangsfläche des Niederhalters und der Außenumfangsfläche der Antriebswelle erstrecken und somit als Ringspalt ausgebildet sein.

Um einen gezielten Austrag der Schmelze aus dem Spalt zu gewährleisten, weist der Niederhalter zumindest eine sich von der Innenumfangsseite des Niederhalters zu einer Außenumfangsseite des Niederhalters erstreckende Auslassöffnung auf, die mit dem Spalt in Fluidverbindung steht. Vorzugsweise sind zumindest zwei, insbesondere zumindest drei, solcher Auslassöffnungen vorgesehen.

Vorzugsweise wird zumindest eine Auslassöffnung durch eine in im Wesentlichen axialer Richtung verlaufende Innenfläche begrenzt. Diese Innenfläche ist vorzugsweise eben oder konkav ausgebildet. Von der Innenfläche kann die von der Antriebswelle angetriebene und sich an der Innenumfangsseite des Niederhalters entlang bewegende Schmelze abgestrichen und abgeleitet werden.

Um Teile der sich an der Innenumfangsseite des Niederhalters entlang bewegenden Schmelze abzutrennen und so schneller abzuführen kann die Innenfläche mit der Innenumfangsfläche einen im Querschnitt des Niederhalters gesehen spitzen Innenwinkel bilden. Zwischen der Innenfläche der Auslassöffnung und der Innenumfangsfläche des Niederhalters ist somit eine Schneidkante ausgebildet, um die sich an der Innenumfangsseite des Niederhalters entlang bewegende Schmelze abzutrennen und der Auslassöffnung zuzuführen.

Vorzugsweise ist der Niederhalter axial verschiebbar an einem mit dem Setzelement verbindbaren Endabschnitt der Antriebswelle gelagert. Der Niederhalter kann gegebenenfalls auch frei drehbar an einem mit dem Setzelement verbindbaren Endabschnitt der Antriebswelle gelagert sein. In diesem Fall könnte der Niederhalter durch eine Reibung zwischen Niederhalter und Bauteil hinsichtlich seiner Drehbewegung gebremst werden. Der Niederhalter kann aber auch mit einem Gehäuse der Vorrichtung drehfest gekoppelt sein und dadurch keine Drehbewegung vollziehen. Dies hat den Vorteil, dass der Niederhalter, wenn er auf das Bauteil gesetzt wird, nicht auf dem Bauteil entlangschleift und dadurch eventuell das Bauteil beschädigt.

Gemäß einer Ausführungsform ist der Niederhalter in einem vordefinierbaren Bereich relativ zur Antriebswelle axial verschiebbar. Hierzu kann die Antriebswelle eine Wellenschulter aufweisen, die einen Anschlag für den Niederhalter darstellt. Alternativ oder zusätzlich kann ein formschlüssig mit der Antriebswelle in Eingriff stehender Aufsatz vorgesehen sein, welcher einen Anschlag für den Niederhalter bildet. Der Niederhalter kann in einer Ruhelage an dem Anschlag, also an der Wellenschulter und/oder an dem Aufsatz, anliegen und insbesondere gegen den Anschlag vorgespannt sein.

Gemäß einer Ausführungsform kann an der Stirnseite der Antriebswelle eine Aufnahme für einen Bit ausgeformt sein. Ist ein Bit in die Aufnahme eingesetzt, ist die mit dem Setzelement in Kontakt zu bringende Stirnfläche des Bits als Stirnseite der Antriebswelle anzusehen.

Vorteilhafterweise kann ein Niederhalteranschlag zur Begrenzung einer Verschiebung des Niederhalters vorgesehen sein. Der Niederhalteranschlag ist vorzugsweise an der Antriebswelle angebracht. Gemäß einer Ausführungsform weisen die Antriebswelle und der Niederhalteranschlag eine unmittelbare oder mittelbare formschlüssige Verbindung auf, um eine von dem Niederhalter auf den Niederhalteranschlag übertragene Axialkraft in die Antriebswelle einzuleiten. Vorzugsweise wird die formschlüssige Verbindung zwischen der Antriebswelle und dem Niederhalteranschlag zur Übertragung der Axialkraft durch die Einstellmutter und das auf der Antriebswelle ausgeformte Außengewinde gebildet.

Der Niederhalteranschlag kann um die Antriebswelle herum angeordnet sein. Insbesondere ist der Niederhalteranschlag hülsenförmig um die Antriebswelle herum angeordnet. Der Niederhalteranschlag ist vorzugsweise drehbar auf der Antriebswelle gelagert und kann sich daher mit dem Niederhalter mitdrehen. Alternativ kann der Niederhalteranschlag direkt oder indirekt mit einem drehfesten Gehäuse der Vorrichtung verbunden sein.

Gemäß einer Ausführungsform weist der Niederhalteranschlag eine, insbesondere ringförmige, Anlagefläche bzw. Anlauffläche auf, welche mit dem Niederhalter, insbesondere einer Anlagefläche des Niederhalters, in Kontakt kommt, wenn dieser vollständig aus einer Ausgangsposition bzw. Grundstellung heraus in eine Endposition bzw. Andrückendstellung bewegt ist.

Um den Niederhalter in die Ausgangsposition vorzuspannen, ist vorzugsweise ein Federelement, insbesondere ein Druckfederelement, zwischen dem Niederhalter und dem Niederhalteranschlag angeordnet, entgegen dessen Rückstellkraft der Niederhalter in Richtung des Niederhalteranschlags verschiebbar ist.

Gemäß einer Ausführungsform sind der Niederhalter und der Niederhalteranschlag drehfest miteinander verbunden. Beispielsweise weisen der Niederhalter und der Niederhalteranschlag korrespondierende sich in axialer Richtung erstreckende Öffnungen auf, in welche, insbesondere zylinderförmige, Stifte eingesetzt sind, um den Niederhalter und den Niederhalteranschlag drehfest miteinander zu koppeln.

Die Vorrichtung eignet sich insbesondere zum Setzen von kegelstumpfförmigen Setzelementen, d.h. Setzelementen ohne Kopf.

Nachfolgend wird die Erfindung anhand einer rein beispielhaften Ausführungsform unter Bezugnahme auf die beigefügten Zeichnungen beschrieben. Es zeigen:
- Fig. 1A: eine erste perspektivische Darstellung einer erfindungsgemäßen Vorrichtung in einer Ausgangsposition;
- Fig. 1B: eine erste perspektivische Darstellung der erfindungsgemäßen Vorrichtung von Fig. 1A in einer Endposition;
- Fig. 2A: eine zweite perspektivische Darstellung der erfindungsgemäßen Vorrichtung von Fig. 1A in der Ausgangsposition;
- Fig. 2B: eine zweite perspektivische Darstellung der erfindungsgemäßen Vorrichtung von Fig. 1B in der Endposition;
- Fig. 3A: eine Längsschnittansicht der Vorrichtung von Fig. 1A in der Ausgangsposition;
- Fig. 3B: eine Längsschnittansicht der Vorrichtung von Fig. 1B in der Endposition;
- Fig. 4A: eine Detailansicht von Fig. 3B;
- Fig. 4B: eine Detailansicht von Fig. 4A;
- Fig. 5A: eine Seitenansicht des Niederhalters von Fig. 1A;
- Fig. 5B: eine Querschnittsansicht des Niederhalters von Fig. 5A entlang der Schnittkante F - F.

Die Figuren zeigen eine Vorrichtung 10 zum Setzen eines Setzelements in einem Bauteil unter Erzeugung einer Reibschweißverbindung zwischen dem Setzelement und dem Bauteil.

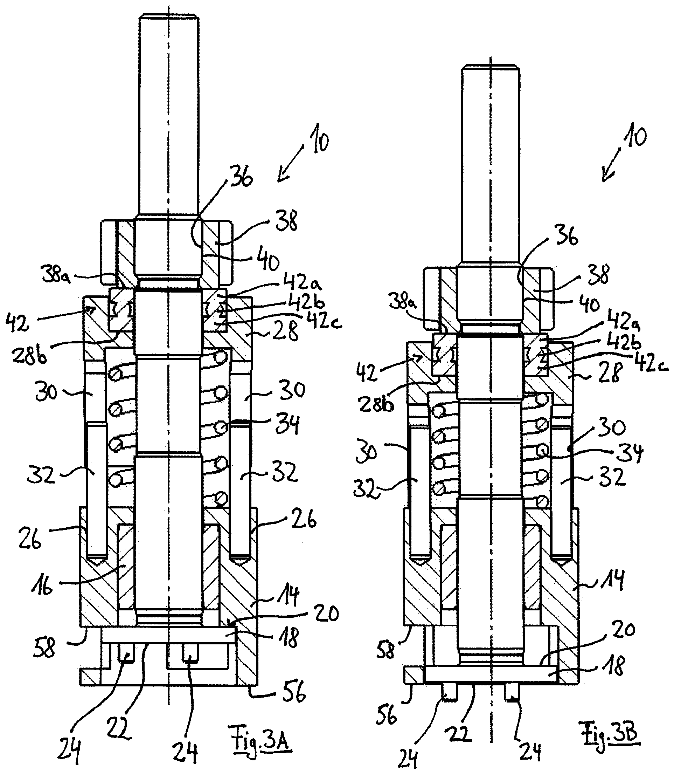

Die Vorrichtung umfasst eine Antriebswelle 12 an dessen Endabschnitt 12a ein Niederhalter 14 angebracht ist. Der Niederhalter 14 ist hülsenförmig um die Antriebswelle 12 herum angeordnet und mittels eines Nadellagers 16 (siehe Fig. 3A und 3B) um die Antriebswelle 12 drehbar gelagert. An der Antriebswelle 12 ist eine Querschnittsvergrößerung 18 vorgesehen, die eine Wellenschulter 20 als Anlagefläche für den Niederhalter 14 in der Ausgangslage (Fig. 3A) ausbildet. Auf der der Wellenschulter 20 gegenüberliegenden Seite der Querschnittsvergrößerung 18 ist eine Stirnfläche 22 der Antriebswelle 12 ausgebildet. Aus der Stirnfläche 22 stehen exzentrisch angeordnete Aufnahmeelemente 24 heraus, welche in Öffnungen einer Rückseite eines nicht gezeigten Setzelements eingreifen können. Über die Aufnahmeelemente 24 wird ein Drehmoment von der Antriebswelle 12 auf das Setzelement übertragen.

Ferner ist um die Antriebswelle 12 herum in axialer Richtung versetzt zu dem Niederhalter 14 ein Niederhalteranschlag 28 vorgesehen. Der Niederhalteranschlag 28 ist drehbar um die Antriebswelle 12 gelagert. Um den Niederhalter 14 drehfest mit dem Niederhalteranschlag 28 zu koppeln, sind an dem Niederhalter 14 Öffnungen 26 (Fig. 3A) in Form von Sacklöchern ausgeformt und an dem Niederhalteranschlag 28 zu den Öffnungen 26 korrespondierende Öffnungen 30 in Form von in axialer Richtung verlaufenden, offenen Nuten ausgeformt. Jeweils ein Zylinderstift 32 ist in eine der Öffnungen 26 und in die korrespondierende der Öffnungen 30 gesteckt und sorgt somit für eine drehfeste Verbindung zwischen dem Niederhalter 14 und dem Niederhalteranschlag 28. Die Innendurchmesser der Öffnungen 30 sind dabei größer ausgebildet als die Außendurchmesser der Zylinderstifte 32, damit sich die Zylinderstifte 32 in axialer Richtung in den Öffnungen 30 bewegen können und somit der Niederhalter 14 relativ zu dem Niederhalteranschlag 28 in axialer Richtung verschiebbar ist.

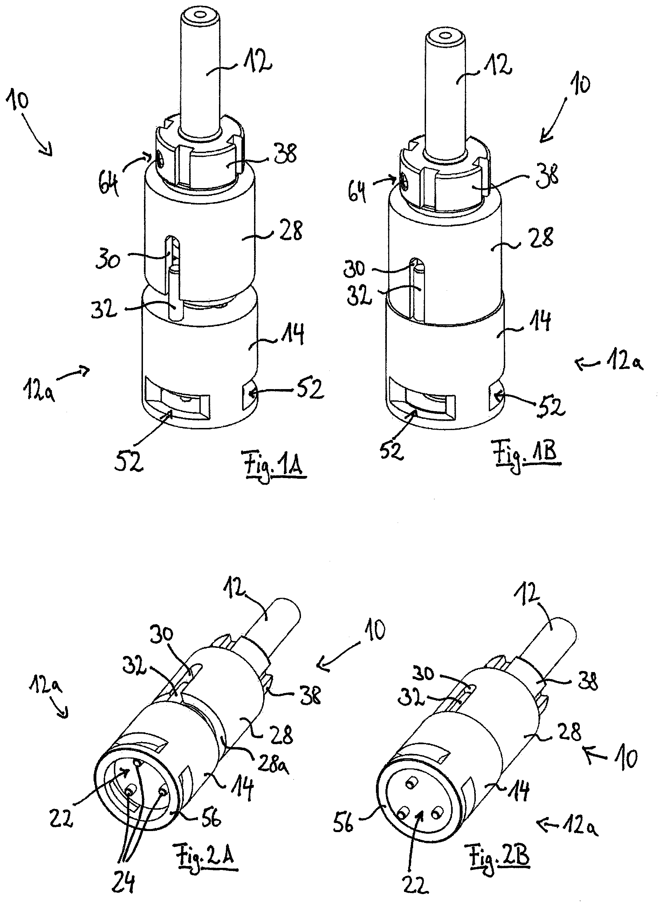

Zwischen dem Niederhalter 14 und dem Niederhalteranschlag 28 ist ein Federelement 34 angeordnet, welches in Form einer Spiraldruckfeder ausgebildet ist. Das Federelement 34 ist spiralförmig um die Antriebswelle 12 herum angeordnet und steht mit dem Niederhalter 14 und den Niederhalteranschlag 28 jeweils stirnseitig in Kontakt. In einer Ausgangsposition (Fig. 3A) drückt das Federelement 34 den Niederhalter 14 von dem Niederhalteranschlag 28 weg gegen die Wellenschulter 20 der Antriebswelle 12. Wenn der Niederhalter 14 mit seiner Anlagefläche 56 gegen ein Bauteil gedrückt wird und von der Ausgangsposition in axialer Richtung in eine Endposition (Fig. 3B) bewegt wird, wird das Federelement 34 elastisch komprimiert. In der Endposition stößt der Niederhalter 14 gegen eine Anlauffläche 28a (siehe Fig. 2A) des Niederhalteranschlags 28, wodurch die axiale Bewegung des Niederhalters 14 relativ zu der Antriebswelle 12 beschränkt ist.

Auf der dem Niederhalter 14 abgewandten Seite des Niederhalteranschlags 28 weist die Antriebswelle 12 ein Außengewinde 36 auf. Auf das Außengewinde 36 ist eine Einstellmutter 38, insbesondere eine Nutmutter, mit einem Innengewinde 40 aufgeschraubt. Die Einstellmutter 38 weist eine Stirnfläche 38a auf, welche mit einem Axiallager 42 in Kontakt steht. Das Axiallager 42 steht wiederum mit einer Stirnfläche 28b des Niederhalteranschlags 28 in Kontakt. Genauer gesagt steht die Einstellmutter 38 mit einem ersten Ring 42a des Axiallagers 42 in axialer Richtung in Kontakt. Dieser erste Ring 42a des Axiallagers 42 steht mit mehreren Wälzkörpern 42b des Axiallagers 42 in axialer Richtung in Kontakt und die Wälzkörper 42b stehen mit einem zweiten Ring 42c des Axiallagers 42 in axialer Richtung in Kontakt. Der zweite Ring 42c steht mit dem Niederhalteranschlag 28 in axialer und radialer Richtung in Kontakt, nicht jedoch mit der Antriebswelle 12. Hierdurch ist der Niederhalteranschlag 28 frei drehbar gegenüber der mit der Antriebswelle 12 mitdrehenden Einstellmutter 38 gelagert. Um die Einstellmutter 38 gegenüber der Antriebswelle 12 zu fixieren, ist eine Fixierschraube 64 (Fig. 1A) für die Einstellmutter 38 vorgesehen, welche in Form einer Klemmschraube ausgebildet ist und mit ihrer Stirnseite gegen die Antriebswelle 12 in die Einstellmutter 38 eingeschraubt werden kann.

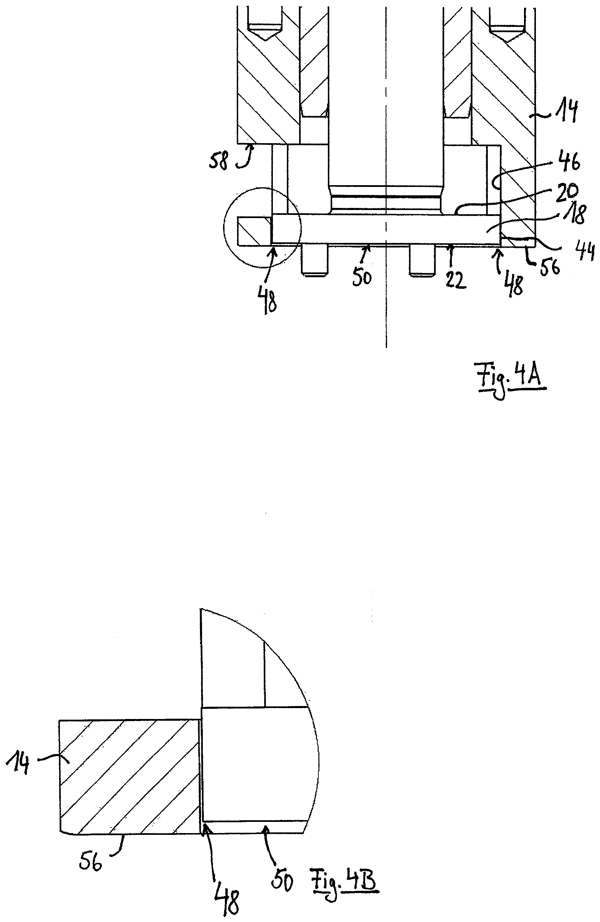

In Fig. 4B ist zu sehen, dass der Außendurchmesser der Querschnittsvergrößerung 18 geringfügig kleiner ist als der Innendurchmesser des Niederhalters 14. In anderen Worten ist eine Außenumfangsfläche 44 der Antriebswelle 12 im Bereich der Querschnittsvergrößerung 18 beabstandet zu einer Innenumfangsfläche 47 des Niederhalters 14 in einem Bereich des Niederhalters 14, welchen die Querschnittsvergrößerung 18 bei einer Bewegung des Niederhalters 14 von der Ausgangsposition in die Endposition durchläuft.

Hierdurch wird ein Spalt 48 zwischen der Querschnittsvergrößerung 18 und dem Niederhalter 14 erzeugt, durch den beim Setzen des Setzelements verdrängte Schmelze aufsteigen kann. In Fig. 4B ist zu sehen, dass der Spalt 48 in einen Raum 50 mündet, in dem sich beim Setzen eines Setzelements Schmelze sammelt. Der Raum 50 weist in der in Fig. 3B gezeigten Endposition eine Höhe von ca. 0,2 mm auf. Die Höhe des Raums 50 ist mittels der Einstellmutter 38 einstellbar.

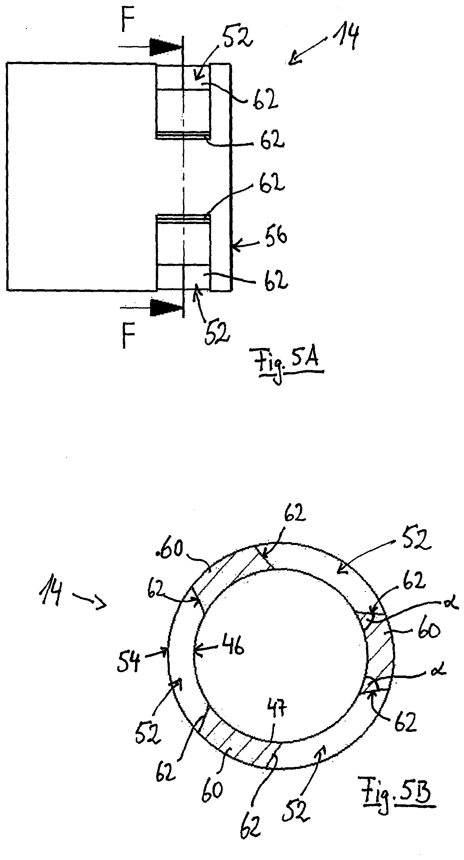

In Fig. 5A ist der Niederhalter 14 in einer Seitenansicht gezeigt. Dort ist zu sehen, dass der Niederhalter 14 mehrere Auslassöffnungen 52 aufweist, welche sich jeweils von der Innenumfangsseite 46 (siehe Fig. 5B) des Niederhalters 14 zu einer Außenumfangsseite 54 des Niederhalters 14 erstrecken. Die Auslassöffnungen 52 sind in gleichen Abständen entlang des Umfangs des Niederhalters 14 verteilt. Sie beginnen, wie in Fig. 4A zu sehen ist, in einem axialen Abstand zu der Anlagefläche 56 des Niederhalters 14, welcher im Wesentlichen der axialen Abmessung der Querschnittsvergrößerung 18, d.h. dem Abstand zwischen der Stirnfläche 22 und der Wellenschulter 20, entspricht, und erstrecken sich bis zu einer Stirnfläche 58 des Niederhalters 14, welche in der Ausgangsposition des Niederhalters 14 mit der Wellenschulter 20 in Kontakt steht. Die Auslassöffnungen 52 sorgen dafür, dass Schmelze, welche entlang des Spalts 48 fließt, aus dem Niederhalter 14 ausgetragen wird. Zwischen den Auslassöffnungen 52 sind, wie in Fig. 5B zu sehen ist, Stege 60 des Niederhalters 14 vorgesehen. Die Stege 60 begrenzen die Auslassöffnungen 52 in Umfangsrichtung und weisen Innenflächen 62 auf, welche die Auslassöffnungen 52 in Umfangsrichtung definieren. Die Innenflächen 62 sind konkav ausgebildet und erstrecken sich gleichmäßig in axialer Richtung. Um eine Schneidkante zum Abtrennen von Schmelze zu formen, bilden die Innenflächen 62 mit der auf der Innenumfangsseite 46 gelegenen Innenumfangsfläche 47 des Niederhalters 14 einen im Querschnitt des Niederhalters 14 gesehen spitzen Innenwinkel α (siehe Fig. 5B). In den Figuren sind drei Auslassöffnungen 52 gezeigt. Es ist aber auch denkbar, den Niederhalter 14 mit einer, zwei oder mehr als drei Auslassöffnungen 52 auszustatten.

Im Folgenden wird nun auf die Funktionsweise der Vorrichtung 10 eingegangen. Um ein Setzelement unter Erzeugung einer Reibschweißverbindung in ein Bauteil zu setzen, wird die Vorrichtung 10 mit einem Setzelement bestückt, d.h. das Setzelement wird stirnseitig an der Antriebswelle 12 angebracht, sodass die Aufnahmeelemente 24 in korrespondierende Öffnungen des Setzelements eingreifen und eine Rückseite des Setzelements an der Stirnfläche 22 der Antriebswelle 12 flächig anliegt. Dann wird die Antriebswelle 12 in Rotation versetzt, wodurch der Niederhalter 14 und der mit dem Niederhalter 14 drehfest verbundene Niederhalteranschlag 28 bedingt durch Reibung zwischen der Wellenschulter 20 der Antriebswelle 12 und der Stirnfläche 58 des Niederhalters 14 (siehe Fig. 3A) ebenfalls in Rotation versetzt wird.

Dann wird die Vorrichtung 10, beispielsweise mittels eines Roboterarms, in die Nähe eines Bauteils befördert, bis die Anlagefläche 56 des Niederhalters 14 einen definierten Abstand von dem Bauteil entfernt ist. Anschließend wird die Antriebswelle 12 und der daran angebrachte Niederhalter 14 durch einen Vorschubantrieb der Vorrichtung 10 in axialer Zustellrichtung verfahren, bis die Anlagefläche 56 des Niederhalters 14 auf dem Bauteil aufliegt. Durch ein weiteres Verfahren der Antriebswelle 12 in der Zustellrichtung wird der Niederhalter 14 entgegen der Rückstellkraft des Federelements 34 in Richtung des Niederhalteranschlags 28 verschoben, sodass der Reibkontakt zwischen der Wellenschulter 20 der Antriebswelle 12 und der Stirnfläche 58 des Niederhalters 14 aufgelöst wird. Gleichzeitig erhöht sich eine Reibkraft zwischen der Anlagefläche 56 und einer Oberfläche des Bauteils, sodass der Niederhalter 14 und der Niederhalteranschlag 28 bezüglich ihrer Rotation gebremst werden.

Alternativ ist denkbar, den Niederhalter 14 drehfest mit einem nicht gezeigten Gehäuse der Vorrichtung 10 zu verbinden, sodass sich der Niederhalter 14 zu keinem Zeitpunkt des Setzprozesses mit der Antriebswelle 12 mit dreht.

Für die Zustellbewegung ist es nicht von Bedeutung, ob zuerst der Niederhalter 14 oder zuerst das Setzelement mit der Bauteiloberfläche in Berührung kommt. Das Setzelement kann also länger in axialer Richtung ausgebildet sein, als die Anlagefläche 56 des Niederhalters 14 in der Ausgangsposition von der Stirnfläche 22 der Antriebswelle 12 beabstandet ist, oder kürzer.

Unter Andrücken des durch die Antriebswelle 12 angetriebenen Setzelements erwärmt sich die Oberfläche des Bauteils, bis die Oberfläche anfängt zu schmelzen und das Setzelement in die Oberfläche eintreten kann. Wie weit das Setzelement in das Bauteil eindringen soll wird durch den Abstand zwischen dem Niederhalter 14 und dem Niederhalteranschlag 28 in der Ausgangsposition festgelegt. Hierzu wird die Einstellmutter 38 so weit wie gewünscht auf das Innengewinde 40 der Antriebswelle 12 aufgeschraubt und dann mittels der Fixierschraube 64 fixiert.

Wird die Antriebswelle 12 während des Setzprozesses in axialer Richtung vorgeschoben, wird das Federelement 34 gestaucht und der Niederhalteranschlag 28 verfährt mit der Welle, bis der Niederhalteranschlag 28 stirnseitig auf den Niederhalter 14 trifft. Dabei wird ein Teil der Schmelze aus dem durch die Querschnittsvergrößerung 18 begrenzten Raum 50 durch den Spalt 48 in Richtung der Auslassöffnungen 52 verdrängt, dort von den Schneidkanten, welche durch die Innenflächen 62 und der Innenumfangsfläche 47 gebildet sind, abgeschnitten und durch die Auslassöffnungen 52 hindurch in die Umgebung herausgefördert.

Durch die Winkelstellung der Einstellmutter und damit durch den Abstand zwischen der Anlagefläche 56 des Niederhalters 14 und der Stirnfläche 22 der Antriebswelle 12 wird zudem festgelegt, wie viel Platz in axialer Richtung in dem Raum 50 zur Verfügung steht, um Schmelze darin aufzunehmen. Dieser Platz in axialer Richtung, d.h. die Höhe des Raums 50, definiert, wie hoch ein ringförmiger Wulst, den die Schmelze entlang des Umfangs des Setzelements bildet, werden kann. Folglich kann durch die Winkelstellung der Einstellmutter der Raum 50 definiert werden, den die verdrängte Schmelze einnehmen kann.

### Bezugszeichenliste

- 10: Vorrichtung
- 12: Antriebswelle
- 12a: Endabschnitt
- 14: Niederhalter
- 16: Nadellager
- 18: Querschnittsvergrößerung
- 20: Wellenschulter
- 22: Stirnfläche
- 24: Aufnahmeelement
- 26: Öffnung
- 28: Niederhalteranschlag
- 28a: Anlauffläche
- 28b: Stirnfläche
- 30: Öffnung
- 32: Zylinderstift
- 34: Federelement
- 36: Außengewinde
- 38: Einstellmutter
- 38a: Stirnfläche
- 40: Innengewinde
- 42: Axiallager
- 42a: erster Ring
- 42b: Wälzkörper
- 42c: zweiter Ring
- 44: Außenumfangsfläche
- 46: Innenumfangsseite
- 47: Innenumfangsfläche
- 48: Spalt
- 50: Raum
- 52: Auslassöffnung
- 54: Außenumfangsseite
- 56: Anlagefläche
- 58: Stirnfläche
- 60: Steg
- 62: Innenfläche
- 64: Fixierschraube

## Patentansprüche

1. Vorrichtung (10) zum Setzen eines Setzelements in einem Bauteil unter Erzeugung einer Reibschweißverbindung zwischen dem Setzelement und dem Bauteil, umfassend:
eine in Rotation um eine Antriebsachse versetzbare Antriebswelle (12) zum Übertragen eines Drehmoments auf das Setzelement, und
einen Niederhalter (14) mit einer Anlagefläche (56) zum Übertragen einer axialen Anpresskraft auf das Bauteil,
wobei
die Antriebswelle (12) eine Stirnfläche (22) aufweist, und
Einstellmittel (38) vorgesehen sind, um einen minimalen Abstand zwischen der Anlagefläche (56) des Niederhalters (14) und der Stirnfläche (22) der Antriebswelle (12) einzustellen,
wobei
der Niederhalter (14) die Antriebswelle (12) auf Höhe der Anlagefläche (56) vollständig in Umfangsrichtung umgibt, **dadurch gekennzeichnet, dass** zwischen einer Innenumfangsfläche (47) des Niederhalters (14) und einer Außenumfangsfläche (44) der Antriebswelle (12) ein Spalt (46) zur Aufnahme beim Reibschweißen aufsteigender Schmelze vorgesehen ist und
dass der Niederhalter (14) zumindest eine sich von der Innenumfangsseite (46) des Niederhalters (14) zu einer Außenumfangsseite (54) des Niederhalters (14) erstreckende Auslassöffnung (52) aufweist, die mit dem Spalt (46) in Fluidverbindung steht.

2. Vorrichtung (10) nach Anspruch 1,
**dadurch gekennzeichnet, dass**
die Antriebswelle (12) mit einem Außengewinde (36) versehen ist, welches in Eingriff mit einem Innengewinde (40) eines als Einstellmutter ausgebildeten Einstellmittels (38) steht, so dass durch ein Verdrehen der Einstellmutter (38) relativ zu der Antriebswelle (12) der minimale Abstand zwischen der Anlagefläche (56) des Niederhalters (14) und der Stirnfläche (22) der Antriebswelle (12) einstellbar ist.

3. Vorrichtung (10) nach Anspruch 1 oder 2,
**dadurch gekennzeichnet, dass**
die Einstellmittel (38) Fixiermittel (64) umfassen, mittels derer die Einstellmittel (38), insbesondere die Einstellmutter, in einer definierten Position fixierbar sind.

4. Vorrichtung (10) nach zumindest einem der vorstehenden Ansprüche,
**dadurch gekennzeichnet, dass**
der Spalt (46) als Ringspalt ausgebildet ist.

5. Vorrichtung (10) nach Anspruch 1,
**dadurch gekennzeichnet, dass**
die zumindest eine Auslassöffnung (52) eine in im Wesentlichen axialer Richtung verlaufende Innenfläche (62) aufweist.

6. Vorrichtung (10) nach Anspruch 5,
**dadurch gekennzeichnet, dass**
die Innenfläche (62) mit der Innenumfangsfläche (47) einen in Querschnittsrichtung gesehen spitzen Innenwinkel (α) bildet.

7. Vorrichtung (10) nach zumindest einem der vorstehenden Ansprüche,
**dadurch gekennzeichnet, dass**
der Niederhalter (14) axial verschiebbar, insbesondere frei drehbar, an einem mit dem Setzelement verbindbaren Endabschnitt (12a) der Antriebswelle (12) gelagert ist.

8. Vorrichtung (10) nach Anspruch 7,
**dadurch gekennzeichnet, dass**
der Niederhalter (14) in einem vordefinierbaren Bereich relativ zur Antriebswelle (12) axial verschiebbar ist.

9. Vorrichtung (10) nach zumindest einem der vorstehenden Ansprüche,
**dadurch gekennzeichnet, dass**
ein Niederhalteranschlag (28) zur Begrenzung einer Verschiebung des Niederhalters (14) vorgesehen ist, insbesondere welcher, vorzugsweise drehbar, um die Antriebswelle (12) herum angeordnet ist.

10. Vorrichtung (10) nach Anspruch 9,
**dadurch gekennzeichnet, dass**
ein Federelement (34), insbesondere ein Druckfederelement, zwischen dem Niederhalter (14) und dem Niederhalteranschlag (28) angeordnet ist, entgegen dessen Rückstellkraft der Niederhalter (14) in Richtung des Niederhalteranschlags (28) verschiebbar ist.

11. Vorrichtung (10) nach Anspruch 9 oder 10,
**dadurch gekennzeichnet, dass**
der Niederhalter (14) und der Niederhalteranschlag (28) drehfest miteinander verbunden sind.

## Claims

1. An apparatus (10) for setting a setting element in a component while producing a friction welding connection between the setting element and the component, said apparatus (10) comprising:
a drive shaft (12) which can be set into rotation about a drive axis for transmitting a torque to the setting element; and
a downholder (14) having a contact surface (56) for transmitting an axial pressing force to the component,
wherein
the drive shaft (12) has an end face (22) and
adjustment means (38) are provided to adjust a minimum spacing between the contact surface (56) of the downholder (14) and the end face (22) of the drive shaft (12),
wherein
the downholder (14) completely surrounds the drive shaft (12) at the level of the contact surface (56) in a peripheral direction, **characterized in that** a gap (46) for receiving melt that rises during the friction welding is provided between an inner peripheral surface (47) of the downholder (14) and an outer peripheral surface (44) of the drive shaft (12); and
**in that** the downholder (14) has at least one outlet opening (52) which extends from the inner peripheral side (46) of the downholder (14) to an outer peripheral side (54) of the downholder (14) and which is in fluid communication with the gap (46).

2. An apparatus (10) in accordance with claim 1,
**characterized in that**
the drive shaft (12) is provided with an external thread (36) which is in engagement with an internal thread (40) of an adjustment means (38) configured as an adjustment nut so that the minimum spacing between the contact surface (56) of the downholder (14) and the end face (22) of the drive shaft (12) can be adjusted by a rotation of the adjustment nut (38) relative to the drive shaft (12).

3. An apparatus (10) in accordance with claim 1 or claim 2,
**characterized in that**
the adjustment means (38) comprise fixing means (64) by means of which the adjustment means (38), in particular the adjustment nut, can be fixed in a defined position.

4. An apparatus (10) in accordance with at least one of the preceding claims,
**characterized in that**
the gap (46) is configured as an annular gap.

5. An apparatus (10) in accordance with claim 1,
**characterized in that**
the at least one outlet opening (52) has an inner surface (62) extending in a substantially axial direction.

6. An apparatus (10) in accordance with claim 5,
**characterized in that**
the inner surface (62) forms an acute inner angle (α), viewed in a cross-sectional direction, with the inner peripheral surface (47).

7. An apparatus (10) in accordance with at least one of the preceding claims,
**characterized in that**
the downholder (14) is axially displaceably supported, in particular freely rotatably supported, at an end section (12a) of the drive shaft (12) that is connectable to the setting element.

8. An apparatus (10) in accordance with claim 7,
**characterized in that**
the downholder (14) is axially displaceable relative to the drive shaft (12) in a region which can be predefined.

9. An apparatus (10) in accordance with at least one of the preceding claims,
**characterized in that**
a downholder abutment (28) is provided for bounding a displacement of the downholder (14), in particular a downholder abutment (28) which is arranged, preferably rotatably arranged, around the drive shaft (12).

10. An apparatus (10) in accordance with claim 9,
**characterized in that**
a spring element (34), in particular a compression spring element, is arranged between the downholder (14) and the downholder abutment (28) and the downholder (14) is displaceable against a restoring force of said spring element (34) in the direction of the downholder abutment (28).

11. An apparatus (10) in accordance with claim 9 or claim 10,
**characterized in that**
the downholder (14) and the downholder abutment (28) are rotationally fixedly connected to one another.

## Revendications

1. Dispositif (10) de pose d'un élément à poser dans un composant par création d'une liaison de soudage par friction entre l'élément à poser et le composant, comprenant :
un arbre d'entraînement (12) pouvant être mis en rotation autour d'un axe d'entraînement pour transmettre un couple de rotation à l'élément à poser, et
un organe de retenue (14) présentant une surface d'appui (56) pour transmettre une force de pressage axiale au composant,
dans lequel
l'arbre d'entraînement (12) présente une surface frontale (22), et
il est prévu des moyens de réglage (38) pour régler une distance minimale entre la surface d'appui (56) de l'organe de retenue (14) et la surface frontale (22) de l'arbre d'entraînement (12),
l'organe de retenue (14) entoure complètement l'arbre d'entraînement (12) en direction périphérique à la hauteur de la surface d'appui (56),
**caractérisé en ce que**
entre une surface périphérique intérieure (47) de l'organe de retenue (14) et une surface périphérique extérieure (44) de l'arbre d'entraînement (12), il est prévu un interstice (46) destiné à recevoir la matière fondue qui remonte lors du soudage par friction, et
**en ce que** l'organe de retenue (14) présente au moins un orifice de sortie (52) qui s'étend depuis la face périphérique intérieure (46) de l'organe de retenue (14) jusqu'à une face périphérique extérieure (54) de l'organe de retenue (14) et qui est en communication fluidique avec l'interstice (46).

2. Dispositif (10) selon la revendication 1,
**caractérisé en ce que**
l'arbre d'entraînement (12) est pourvu d'un filetage (36) qui est en prise avec un taraudage (40) d'un moyen de réglage (38) réalisé sous forme d'écrou de réglage, de sorte qu'une rotation de l'écrou de réglage (38) par rapport à l'arbre d'entraînement (12) permet de régler la distance minimale entre la surface d'appui (56) de l'organe de retenue (14) et la surface frontale (22) de l'arbre d'entraînement (12).

3. Dispositif (10) selon la revendication 1 ou 2,
**caractérisé en ce que**
les moyens de réglage (38) comprennent des moyens de fixation (64) permettant de fixer les moyens de réglage (38), en particulier l'écrou de réglage, dans une position définie.

4. Dispositif (10) selon l'une au moins des revendications précédentes,
**caractérisé en ce que**
l'interstice (46) est réalisé sous forme d'interstice annulaire.

5. Dispositif (10) selon la revendication 1,
**caractérisé en ce que**
ledit au moins un orifice de sortie (52) présente une surface intérieure (62) s'étendant en direction sensiblement axiale.

6. Dispositif (10) selon la revendication 5,
**caractérisé en ce que**
la surface intérieure (62) forme un angle intérieur (α) aigu, vu en direction de section transversale, avec la surface périphérique intérieure (47).

7. Dispositif (10) selon l'une au moins des revendications précédentes,
**caractérisé en ce que**
l'organe de retenue (14) est monté de manière à pouvoir coulisser axialement, en particulier de manière à pouvoir tourner librement, sur une portion d'extrémité (12a) de l'arbre d'entraînement (12) susceptible d'être reliée à l'élément à poser.

8. Dispositif (10) selon la revendication 7,
**caractérisé en ce que**
l'organe de retenue (14) peut coulisser axialement par rapport à l'arbre d'entraînement (12) dans une plage prédéfinissable.

9. Dispositif (10) selon l'une au moins des revendications précédentes,
**caractérisé en ce que**
il est prévu une butée d'organe de retenue (28) pour limiter un coulissement de l'organe de retenue (14), qui, en particulier, est disposée autour de l'arbre d'entraînement (12), de préférence de manière à pouvoir tourner.

10. Dispositif (10) selon la revendication 9,
**caractérisé en ce que**
un élément de ressort (34), en particulier un élément de ressort de compression, est disposé entre l'organe de retenue (14) et la butée d'organe de retenue (28), à l'encontre de la force de rappel duquel l'organe de retenue (14) peut coulisser en direction de la butée d'organe de retenue (28).

11. Dispositif (10) selon la revendication 9 ou 10,
**caractérisé en ce que**
l'organe de retenue (14) et la butée d'organe de retenue (28) sont reliés solidairement en rotation l'un à l'autre.
